# EUROPÄISCHE PATENTSCHRIFT

(11) **EP 1 715 195 B1**
(45) Veröffentlichungstag und Bekanntmachung des Hinweises auf die Patenterteilung: **15.04.2009**
(21) Anmeldenummer: 06005023.4
(22) Anmeldetag: 11.03.2006
(51) Int. Cl.: F15B 15/26, B60R 21/26

(54) **Pyrotechnische Einheit für ein Sicherheitssystem, insbesondere eines Airbags oder eines Gurtstraffers eines Fahrzeugs**
Initiator unit for a safety system, particularly for a vehicle airbag or belt tensioner
Unité de initiateur pour un système de sécurité, notamment pour un sac gonflable ou un prétensionneur de véhicule

(30) Priorität: 19.04.2005 DE 102005017868
(43) Veröffentlichungstag der Anmeldung: 25.10.2006
(73) Patentinhaber: Indet Safety Systems a.s., 75501 Vsetin (CZ)
(72) Erfinder: Schmid, Günther, A-6832 Röthis (AT); Zelenovic, Novica, A-6832 Muntlix (AT)
(74) Vertreter: Kreizlova, Dana

(56) Entgegenhaltungen:
- EP-A- 1 162 333
- EP-A- 1 470 971
- DE-A1- 10 303 377

## Beschreibung

Die Erfindung betrifft eine pyrotechnische Einheit für ein Sicherheitssystem, insbesondere eines Airbags oder eines Gurstraffers eines Fahrzeuges, gemäss den Merkmalen des Oberbegriffes des Patentanspruches 1.

Eine gattungsbildende pyrotechnische Einheit ist aus der DE 103 03 377 A1 bekannt. Ein pyrotechnisches Druckelement ist in einem Gehäuse hermetisch dichtend eingebaut, wobei das Druckelement eine Gasentwickelnde, pyrotechnische Ladung aufweist. Das Druckelement ist über einen Isolierkörper in das Gehäuse eingesetzt und damit in diesem festgelegt. Die Art und Weise, wie das Festlegen in dem Gehäuse geschiet, bleibt bei diesem Stand der Technik offen. Hinzuweisen ist bei der DE 103 03 377 A1 noch auf ein Arretierungs- und Kraftbegrenzungselement, das ebenfalls in dem Gehäuse angeordnet ist. Dieses Element dient nur einer Kraftbegrenzung im Falle der Gasentwicklung durch das gezündete pyrotechnische Druckelement, während es keinen Einfluss auf die Montage der pyrotechnischen Einheit in dem Gehäuse hat.

Ansonsten ist es bei pyrotechnischen Einheiten, wie z.B. Anzündeinheiten oder Gasgeneratoren, wie sie bei Gurtstraffen, Airbags usw. verwendet werden, bekannt, dass sie auf Grund ihrere Rückstosskraft im gezündeten Fall mechanisch abgestützt werden müssen. Diese Abstützung erfolgt bisher durch nachträgliches Einbördeln, Verschrauben, Verstemmen oder der Montage der pyrotechnischen Einheit in dem Gehäuse aus entgegensetzter Richtung gegen ein festes Widerlager. Diese bekannten und teilweise bisher schon durchgeführten Befestigungsarten haben allerdings den Nachteil, dass sie entweder einen zusätzlichen Fertigungsprozess beinhalten oder dass das pyrotechnische Anzündelement zu einem relativ frühen Zeitpunkt in das Sicherheitssystem eingebracht werden muss. Dieser relativ früher Zeitpunkt liegt im Regelfall dann vor, wenn das Sicherheitssystem modulartig von einem Zulieferer eines Kraftfahrzeugherstellers vorgefertigt wird und dieses dann im endmodierten und geprüften Zustand in das Fahrzeug beim Fahrzeughersteller eingebaut wird. Während des Transportes von dem Zulieferer zu dem Kraftfahrzeughersteller sind dann erhöhte und damit kostenintensive Lager- und Transportmassnahmen erforderlich.

Der Erfindung liegt daher die Aufgabe zu Grunde, die eingangs geschilderten Nachteile zu vermeiden, insbesondere die Montage des Sicherheitssystems zu vereinfachen und auch die Lager- und Transportmassnahmen in ihrem Aufwand zu reduzieren.

Diese Aufgabe ist durch die Merkmale des Patentanspruches 1 gelöst.

Erfindungsgemäss ist ein die pyrotechnische Einheit beim Einsetzen in das Gehäuse die pyrotechnische Einheit in dem Gehäuse festlegbares Verriegelungselement vorgesehen, dass sich von innen auf die pyrotechnische Einheit stützt und von aussen auf das Gehäuse stützt, wobei das Verriegelungselement nach der Montage der pyrotechnischen Einheit in dem Gehäuse eine Verformung aufweist, aus der eine eine Vorspannung bewirkende Kräfte resultieren.

Dieses Verriegelungselement hat den Vorteil, dass die pyrotechnische Einheit mi einer gewissen Vorspannung in dem Gehäuse montiert ist, so dass Relativbewegungen zwischen der pyrotechnischen Einheit un dem Gehäuse während des Betriebes des Sicherheitssystems ausgeschlossen sind und auch Fertigungstoleranzen ausgeglichen werden können. Dies ermöglicht es, dass das Sicherheitssystem bei dessen Hersteller vorgefertigt werden kann, ohne dass schon die pyrotechnische Einheit eingesetzt wird. Das Einsetzen der pyrotechnischen Einheit erfolgt dann entweder kurz vor dem Einbau des Sicherheitssystems in das Fahrzeug oder danach, was mittels des erfindungsgemässen Verriegelungselementes erfolgen kann. Damit entfallen zusätsliche Fertigungsprozesse bzw. Montageschritte, wie sie bisher durch nachträgliches Einbördeln, Verschrauben, Verstemmen oder dergleichen erforderlich war. Denn das Verriegelungselement bewirkt nun, dass gleichzetig mit dem Einsetzen der pyrotechnischen Einheit in das Gehäuse die Einheit in dem Gehäuse festgelegt wird. Hier kommen insbesondere Verriegelungselemente in Betracht, die die Festlage auf Grund einer Rastwirkung realisieren. Von besonderem Vorteil ist es, wenn das vorgefertigte Sicherheitssystem kurz vor der Montage in das Fahrzeug am Montageband zur Verfügung steht, so dass kurz vor dem Einbau die pyrotechnische Einheit eingebaut und das Sicherheitssystem überprüft werden kann. Ist die Überprüfung positiv verlaufen, kann das nunmehr funktionstüchtige Sicherheitssystem fehlerfrei in das Fahrzeug eingebaut werden.

In Weiterbildung der Erfindung ist das Verriegelungselement als Scheibe ausgebildet und hintergreift im montierten Zustand ein Absatz des Gehäuses und eine Absatz der pyrotechnischen Einheit. Auf Grund dieser Ausgestaltung des Verriegelungselementes kann die Scheibe in das Gehäuse eingesetzt werden, wobei sie nach dem Einsetzen der pyrotechnischen Einheit in das Gehäuse mit dieser in Wirkverbindung tritt und die pyrotechnische Einheit durch eine Verrastung in dem Gehäuse festlegt. Alternativ dazu ist denkbar, dass die Scheibe mit der pyrotechnischen Einheit in Wirkverbindung gebracht wird und die Verrastung dann beim Einsetzen der pyrotechnischen Einheit in das Gehäuse erfolgt. In bevorzugten Ausführungsformen ist die Scheibe als Tellerscheibe oder fächerförmig ausgebildet, womit den verschiedenen geometrischen Grössen und Formen der pyrotechnischen Einheit und dem damit korrespondierenden Gehäuse Rechnung getragen wird. Ebenso besteht das Verriegelungselement in einer weiteren Ausgestaltung der Erfindung aus einem Federstahl, der während Einsetzvorganges der pyrotechnischen Einheit in das Gehäuse verformbar ist und in seiner Endlage wieder seine ursprüngliche Form einnimt.

Ein Ausführungsbeispiel einer pyrotechnischen Einheit in einem Gehäuse sowie eines Verriegelungselementes, auf welche die Erfindung jedoch nicht beschränkt ist, sind im Folgenden beschrieben und anhand der Figuren erläutert.

Es zeigen:
- Figur 1:: einen Ausschnitt eines Sichrheitssystems eines Fahrzeuges,
- Figur 2:: ein Ausführungsbeispiel eines Verriegelungselementes.

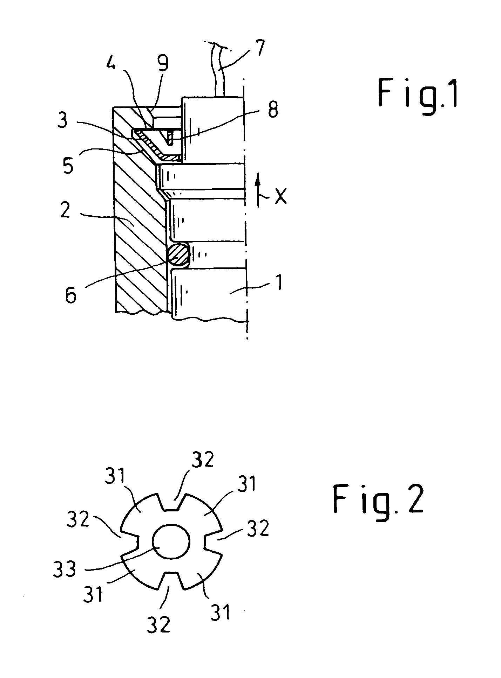

Figur 1 zeigt, soweit im Einzelnen dargestellt, eine mit der Bezugsziffer 1 versehene pyrotechnische Einheit 1, die in dem Gehäuse 2 montiert wird, wobei die Aussenkontur der pyrotechnischen Einheit 1 und die Innenkontur des Gehäuses 2 weitestgehend miteinander korrespondieren. Die pyrotechnische Einheit 1 weist, hier allerdings nicht dargestellt, eine zündbare Ladung auf, die auf weitere Elemente des Sicherheitssystems, insbesondere im Crash-Falle des Fahrzeuges, wirken, so dass z.B. ein Airbag aufgeblasen oder ein Gurtstraffer stramm gezogen wird. Die Ausführungsform der pyrotechnischen Einheit 1 ist im Regelfall mit einem runden Querschnitt versehen, wobei allerdings auch andere Querschnitte denkbar sind.

Gemäss Figur 1 ist ein Verriegelungselement 3 vorgesehen, das bei runden Querschnitt der pyrotechnischen Einheit 1 ebenfalls einen runden Querschnitt aufweist und beispielsweise als Tellerscheibe oder fächerförmige Scheibe ausgebildet ist. Vor, während oder nach dem Einsetzen der pyrotechnischen Einheit 1 in das Gehäuse 2 wird das Verriegelungselement 3 mit eingebracht, und wirkt bei dem Ausführungsbeispiel gemäss Figur 1 mit einer Verrastnut 4 (allgemein ein Absatz) des Gehäuses 2 zusammen. Diese Verrastnut 4 kann einen quadratischen oder rechteckigen Querschnitt aufweisen, weist bei dem konkreten Ausführungsbeispiel einen etwa dreieckförmigen Querschnitt mit einem Abstütztwinkel 5 für das Verriegelungselement 3 auf. Das bedeutet, dass die Verrastnut 4 mit diesem Abstützwinkel 5 versehen ist, auf welchem sich das Verriegelungselement 3 bei Druckbeaufschlagung (Zündung der pyrotechnischen Einheit 1) aus Richtung X abstützt. Ergänzend sich noch ein Dichtelement 6 sowie elektrische Anschlüsse 7 dargestellt, wobei das Dichtelement 6 die hermetisch dichtende Funktion der pyrotechnischen Einheit 1 in dem Gehäuse 2 übernimmt unf über die elektrischen Anschlüsse 7 die Zündung der pyrotechnischen Einheit 1, ausgehend von einem Steuergerät, welches einen Crash-Fall des Fahrzeuges ermittelt, erfolgt.

Aus Figur 1 ist erkenntlich, dass das Verriegelungselement 3 einerseits mit einem Absatz, hier ausgebildet als Verrastnut 4 mit Abstützwinkel 5, des Gehäuses 2 korrespondiert. Gleichzetig weist auch die pyrotechnische Einheit 1 einen entsprechenden Absatz auf, der stufenförmig oder auch in Form von einer entsprechenden Nutz, in die das Verriegelungselement 3 eingreift, ausgebildet ist. Einerseits ist bei der Ausgestaltung der Figur 1 durch eine bleibende Verformung, aus der eine Vorspannung resultiert, des Verriegelungselementes 3 sicher gestellt, dass die pyrotechnische Einheit 1 ohne Spiel in den Gehäuse 2 festgelegt ist. Dies kann unterstützt werden durch ein Vorsprung 8, so dass das Verriegelungselement 3 im montierten Zustand zwischen dem Absatz der pyrotechnischen Einheit 1 und dem zumindest teilweise radial umlaufenden oder auch stiftförmig ausgebildeten umlaufenden Vorsprung 8 des Gehäuses 2 festgelegt ist. Weiterhin ist bei diesem Ausführungsbeispiel vorgesehen, dass das Gehäuse 2 im Öffnungsbereich, über den die pyrotechnische Einheit 1 in das Gehäuse 2 eingesetzt wird, eine zumindest teilweise, insbesondere vollständig radial umlaufende Abschrägung 9 aufweist. Dies vereinfacht das Einsetzen sowohl der pyrotechnischen Einheit 1 als auch des Verriegelungselementes 3 in das Gehäuse 2, wobei gemäss Figur 1 die Montagereihenfolge die folgende ist:
Die pyrotechnische und funktionstüchtig vorgefertigte Einheit 1 wird in das Gehäuse 2 eingesetzt, wobei anschliessend das Verriegelungselement 3, insbesondere automatisiert, koaxial über die pyrotechnische Einheit 1 geführt und so weit in das Gehäuse 2 bewegt wird, bis das radial umlaufende äussere Ende des Verriegelungselementes 3 die Verrastnut 4 hintergreift. Bei diesem Vorgang wirkt die radial umlaufende Abschrägung 9 des Gehäuses 2 vereinfachend, vor allen Dingen bewirkt sie, wenn das Verriegelungselement 3 z.B. aus einem Federstahl besteht, dass es beim Einsetzen und in seiner Endlage so verformt wird, dass aus dieser Verformung eine Vorspannung resultiert. Ist ein zumindest teilweise radial umlaufender oder stiftförmiger oder in kurzen Abschnitten vorhandener Vorsprung 8 vorhanden, ist es erforderlich, dass sowohl die pyrotechnische Einheit 1 als auch das Verriegelungselement 3 an den Stellen, wo der Vorsprung (oder mehrere Vorsprünge) 8 vorhanden ist (sind), erforderlich, dass dort entsdprechende Ausnehmungen vorhanden sind. Solche Ausnehmungen können bei dem Verriegelungselement 3 beispielsweise dadurch realisiert werden, dass das Verriegelungselement 3 als Tellerscheibe mit einer oder mehreren Ausnehmungen ausgebildet ist oder das Verriegelungselement 3 als fächerförmige Scheibe realisiert ist (s. hierzu Figur 2).

Figur 1 zeigt weiterhin, dass das Verriegelungselement 3 im montierten Zustand eine im Querschnitt betrachtet winklige Ausführung einnimt, wobei es insbesondere einen Öffnungswinkel zwischen 20 und 70° bildet. Dieser Winkel ist besonders gut geeignet für die Geometrien und Bauraumverhältnisse der pyrotechnischen Einrichtungen von Fahrzeugen (gerade Personenkraftwagen mit Airbags, Gurtstraffern und dergleichen). Der Winkel kann aber selbstverständlich auch jeden anderen Bereich ober- bzw. unterhalb der genannten Grenzen einnehmen und damit anderen Geometrien und Bauraumverhältnissen angepasst werden.

Wichtig ist, dass das Verriegelungselement 3 so gestaltet ist und die pyrotechnische Einheit 1 so in dem Gehäuse 2 festlegt, dass im Crashfalle die gezündete Ladung der pyrotechnischen Einheit 1 entgegen der X-Richtung wirken kann und eine Kraftabstützung an dem Gehäuse 2 erfolgt.

Figur 2 zeigt eine bestimmte Ausführingsform des Verriegelungselementes 3, das hier mit im Wessentichen runden Querschnitt fächerförmig ausgebildet ist. Zumindest zwei Fächer 31, beim Ausführungsbeispiel sind es vier Fächer 31, stehen bis zum äusseren Durchmesser des Verriegelungselementes 3 nach aussen ab. Zwischen den Fächern 31 sind Zwischenräume 32 vorhanden, wobei die Abmessungen der Fächer 31 und der dazwischen liegenden Zwischenräume 32 so gewählt sind, dass das Verriegelungselement 3 einerseits die notwendige Stabilität un Festigkeit zur Feststellung der pyrotechnischen Einheit 1 in dem Gehäuse 2 aufweist, anderseits aber noch eine ausreichende Verformbarkeit zumindest während der Montage aufweist, wenn das Verriegellungselement 3 in das Gehäuse 2, gegebenfalls über die Abschrägung 9, eingesetzt wird. Schliesslich weist das Verriegelungselement 3 noch eine Öffnung 33 auf, mit welcher es über das Ende im Bereich der elektrischen Anschlüsse 7 der pyrotechnischen Einheit 1 geführt wird. Der Vollständigkeit halber sei noch erwähnt, dass die pyrotechnische Einheit 1 elektrische Anschlüsse 7 in Form von Kabeln zu einem elektrischen Steuergerät aufweisen kann, wobei es in diesem Bereich auch eine Steckverbindung aufweisen kann. Hier könnte daran gedacht werden, die aufzusteckende Steckverbindung mit dem Verriegelungselement 3 zu kombinieren, so dass durch Aufstecken der Steckverbindung mit ihrem Verriegelungselement 3 die pyrotechnische Einheit 1 nicht nur in dem Gehäuse 2 mechanisch festgestellt wird, sondern auch elektrisch kontaktiert wird.

Zusammenfassend bietet also die pyrotechnische Einheit 1, die in den Gehäuse 2 eingebaut und mittels des Verriegelungselement 3 stabilisiert wird , die Möglichkeit, dass das Verriegelungselement 3 gemeinsam mit der pyrotechnischen Einheit 1 in das Gehäuse 2 eingebaut, insbesondere eingepresst wird, wodurch der Vorteil gegeben ist, dass die pyrotechnische Einheit 1 erst dann in das Gehäuse 2 eingebaut wird, wenn dieses bzw. das gesamte Sicherheitssystem kurz vor dem Einbau in das Fahrzeug bereitsteht oder schon in das Fahrzeug eingebaut worden ist. Gegeben-falls kann auch eine Demontage erfolgen, wobei je nach Ausgestaltung des Verriegelungselementes 3 eine zerstörungsfreie bzw. eine werkzeuglose oder eine ein Werkzeug erfordernde Demontage erfolgt.

### Bezugszeichenliste:

- 1.: pyrotechnische Einheit
- 2.: Gehäuse
- 3.: Verriegelungselement
- 4.: Verrastnut
- 5.: Abstützwinkel
- 6.: Dichtelement
- 7.: elektrische Anschlüsse
- 8.: Vorsprung
- 9.: Abschrägung
- 31.: Fächer
- 32.: Zwischenräume
- 33.: Öffnung

## Patentansprüche

1. Pyrotechnische Einheit (1) für ein Sicherheitssystem, insbesondere eines Airbags oder eines Gurtstraffers, eines Fahrzeuges, wobei die pyrotechnische Einheit (1) in einem Gehäuse (2) des Sicherheitssystems montier ist, **dadurch gekennzeichnet, dass** ein die pyrotechnische Einheit (1) beim Einsetzen in das Gehäuse (2) die pyrotechnische Einheit (1) in dem Gehäuse (2) festlegbares Verriegelungselement (3) vorgesehen ist, dass sich von innen auf die pyrotechnische Einheit (1) stützt und von aussen auf das Gehäuse (2) stützt, wobei das Verriegelungselement (3) nach der Montage der pyrotechnischen Einheit (1) in dem Gehäuse (2) eine Verformung aufweist, aus der eine Vorspannung bewirkende Kräfte resultieren.

2. Pyrotechnische Einheit (1) nach Anspruch 1, **dadurch gekennzeichnet, dass** das Verriegelungselement (3) als Scheibe ausgebildet ist und im montierten Zustand einen Absatz des Gehäuses (2) und einen Absatz der pyrotechnischen Einheit (1) hintergreift.

3. Pyrotechnische Einheit (1) nach Anspruch 2, **dadurch gekennzeichnet, dass** die Scheibe fächerförmig ausgebildet ist, mit mindestens zwei Fächern (31) und zwischen den Fächern (31) liegenden Zwischenräumen (32).

4. Pyrotechnische Einheit (1) nach Anspruch 3, **dadurch gekennzeichnet, dass** das Verriegelungselement (3) als Tellerscheibe ausgebildet ist.

5. Pyrotechnische Einheit (1) nach einem der Ansprüche 1 bis 4, **dadurch gekennzeichnet, dass** das Verriegelungselement (3) aus einem Federstahl besteht.

6. Pyrotechnische Einheit (1) nach Anspruch 2, **dadurch gekennzeichnet, dass** der Absatz des Gehäuses (2) als zumindest abschnittsweise, insbesondere vollständig umlaufende radiale Verrastnut (4) ausgebildet ist.

7. Pyrotechnische Einheit (1) nach Anspruch 6, **dadurch gekennzeichnet, dass** die Verrastnut (4) eine Schräge mit einem Abstützwinkel (5) aufweist.

8. Pyrotechnische Einheit (1) nach einem der vorhergehenden Ansprüche, **dadurch gekennzeichnet, dass** das Verriegelungselement (3) im montierten Zustand zwischen dem Absatz der pyrotechnischen Einheit (1) und einem zumindest teilweise radial umlaufenden oder stiftförmigen Vorsprung (8) des Gehäuses (2) festlegbar ist.

9. Pyrotechnische Einheit (1) nach einem der vorhergehenden Ansprüche, **dadurch gekennzeichnet, dass** das Gehäuse (2) in einem Öffnungsbereich, über den die pyrotechnische Einheit (1) in das Gehäuse (2) einsetzbar ist, eine zumindest teilweise, insbesondere vollständig radial umlaufende Abschrägung (9) aufweist.

## Claims

1. Pyrotechnic unit for a safety system, especially for airbags or safety belts of a vehicle, the said pyrotechnic unit (1) mounted in the case (2) of the safety system, **characterized in that** the pyrotechnic unit (1) is equipped upon the setting into the case (2) with the blocking element (3), which from the inside on the pyrotechnic unit (1) and from the outside on the case (2) bears, whereas due to completing of the pyrotechnic unit (1) in the case (2) the blocking element (3) is subjected to the deformation, from which the stress producing forces are generated.

2. Pyrotechnic unit for the safety system according to claim 1,**characterized in that** the blocking element (3) has a disc-shaped form and in the assembled state the blocking element (3) fits into the shoulder of the case (2) and into the shoulder of the pyrotechnic unit (1).

3. Pyrotechnic unit for the safety system according to claim 2, **characterized in that** the disc has a fan-shaped form with at least two fans (31) and with interspaces (32) lying between the said fans (31).

4. Pyrotechnic unit for the safety system according to claim 3, **characterized in that** the blocking element (3) has a dish-shaped form.

5. Pyrotechnic unit for the safety system according to claims 1 to 4, **characterized in that** the blocking element (3) consists of the spring steel.

6. Pyrotechnic unit for a safety system according to claim 2, **characterized in that** the shoulder of the case (2) is generated as at least partially, especially wholly surrounding radial blocking groove (4).

7. Pyrotechnic unit for a safety system according to claim 6, **characterized in that** the blocking groove (4) has a slope with the support angle (5).

8. Pyrotechnic unit for a safety system according to previous claims, **characterized in that** in the assembled state the blocking element (3) is situated between the shoulder of the pyrotechnic unit (1) and the at least radial surrounding or pin-shaped projection (8) of the case (2).

9. Pyrotechnic unit for a safety system according to previous claims, **characterized in that** the case (2) is equipped in its open area, through that the pyrotechnic unit (1) into the case (2) is entered, with at least partially, advantageously fully radial surrounding slope.

## Revendications

1. Unité pyrotechnique (1) pour un système de sécurité, en particulier d'un airbag ou d'un rétracteur de ceinture d'un véhicule, sachant que l'unité pyrotechnique (1) est montée dans un boîtier (2) du système de sécurité, **caractérisée en ce qu'**est prévu un élément de verrouillage (3) sécurisant l'unité pyrotechnique lors de sa mise en place dans le boîtier (2), lequel élément de verrouillage s'appuie de l'intérieur sur l'unité pyrotechnique (1) et de l'extérieur sur le boîtier (2), l'élément de verrouillage (3) présentant, après le montage de l'unité pyrotechnique (1) dans le boîtier (2), une déformation de laquelle résulte des forces entraînant une précontrainte.

2. Unité pyrotechnique (1) selon la revendication 1, **caractérisée en ce que** l'élément de verrouillage (3) est conçu sous forme de disque et, à l'état monté, engage par derrière un épaulement du boîtier (2) et un épaulement de l'unité pyrotechnique (1).

3. Unité pyrotechnique (1) selon la revendication 2, **caractérisée en ce que** le disque est conçu en éventail, avec au moins deux éventails (31) et des interstices (32) entre chaque éventail (31).

4. Unité pyrotechnique (1) selon la revendication 3, **caractérisée en ce que** l'élément de verrouillage (3) est conçu sous forme de rondelle bombée.

5. Unité pyrotechnique (1) selon l'une des revendications 1 à 4, **caractérisée en ce que** l'élément de verrouillage (3) est composé d'un acier à ressort.

6. Unité pyrotechnique (1) selon la revendication 2, **caractérisée en ce que** l'épaulement du boîtier (2) est conçu sous forme d'encoche (4) au moins en partie radiale s'étendant en particulier sur toute la circonférence.

7. Unité pyrotechnique (1) selon la revendication 6, **caractérisée en ce que** l'encoche (4) présente une inclinaison avec un angle d'appui (5).

8. Unité pyrotechnique (1) selon l'une des revendications précédentes, **caractérisée en ce que** l'élément de verrouillage (3) peut, à l'état monté, être sécurisé entre l'épaulement de l'unité pyrotechnique (1) et une saillie (8) du boîtier (2) s'étendant au moins en partie en périphérie radiale ou en forme de goupille.

9. Unité pyrotechnique (1) selon l'une des revendications précédentes, **caractérisée en ce que** le boîtier (2) présente, dans une zone d'ouverture par l'intermédiaire de laquelle l'unité pyrotechnique (1) peut être placée dans le boîtier (2), une partie en biais (9) s'étendant au moins partiellement, en particulier entièrement en périphérie radiale.
